(19) Europäisches Patentamt
European Patent Office
Office européen des brevets

(11) **EP 2 573 347 B1**

(12) **EUROPÄISCHE PATENTSCHRIFT**

(45) Veröffentlichungstag und Bekanntmachung des Hinweises auf die Patenterteilung:
**05.04.2017 Patentblatt 2017/14**

(21) Anmeldenummer: **12006210.4**

(22) Anmeldetag: **03.09.2012**

(51) Int Cl.:
*F01N 3/08* (2006.01)   *F01N 13/04* (2010.01)
*F01N 3/20* (2006.01)   *F01N 9/00* (2006.01)
*F02B 37/007* (2006.01)   *F02B 37/013* (2006.01)
*F02B 37/16* (2006.01)   *F02B 37/18* (2006.01)
*F01N 3/035* (2006.01)   *F01N 3/023* (2006.01)

(54) **Vorrichtung und Verfahren zur Aufbereitung von Abgas einer Brennkraftmaschine**

Device and method for treating exhaust gas of an internal combustion engine

Dispositif et procédé de traitement de gaz d'échappement d'un moteur à combustion interne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2011 DE 102011114295**

(43) Veröffentlichungstag der Anmeldung:
**27.03.2013 Patentblatt 2013/13**

(73) Patentinhaber: **Volkswagen Aktiengesellschaft 38440 Wolfsburg (DE)**

(72) Erfinder:
• **Pott, Ekkehard, Dr.**
  **38518 Gifhorn (DE)**
• **Kahrstedt, Jörn**
  **38446 Wolfsburg (DE)**
• **Kravetz, Bruno**
  **38179 Lagesbüttel (DE)**

(56) Entgegenhaltungen:
WO-A1-03/050398   DE-A1- 19 626 837
DE-A1-102005 039 012   DE-A1-102007 053 932
DE-A1-102011 005 654   DE-C2- 4 311 904

**Beschreibung**

Die vorliegende Erfindung betrifft eine Abgasbehandlungseinrichtung zur Aufbereitung von Abgas einer Brennkraftmaschine, insbesondere eines Dieselmotors. Weiterhin betrifft die vorliegende Erfindung eine Brennkraftanlage, die eine Brennkraftmaschine und eine erfindungsgemäße Abgasbehandlungseinrichtung umfasst, sowie ein Verfahren zur Aufbereitung von Abgas einer Brennkraftmaschine, welches insbesondere mit der erfindungsgemäßen Abgasbehandlungseinrichtung durchführbar ist. Ergänzt wird die vorliegende Erfindung durch ein Kraftfahrzeug, welches eine erfindungsgemäße Abgasbehandlungseinrichtung beziehungsweise eine erfindungsgemäße Brennkraftanlage aufweist.

Zur Effizienzsteigerung von Brennkraftmaschinen, insbesondere von Dieselmotoren, hat sich die Turboladertechnik etabliert, wobei gegebenenfalls zwei Abgasturbolader an eine Brennkraftmaschine angeschlossen werden. Nachteilig daran ist allerdings ein relativ hoher Abgasgegendruck, der die Effizienz der Brennkraftmaschine mindert. Zur Reduzierung des Abgasgegendrucks werden üblicherweise große Biegeradien sowie große Querschnitte der Abgasleitungen vorgesehen.

Hinzu kommt, dass das Abgas von aufgeladenen Motoren, insbesondere Dieselmotoren, stromabwärts des Turboladers beziehungsweise der Turbolader mittels einer Abgasnachbehandlung gereinigt werden müssen. Eine solche Abgasnachbehandlung erfolgt üblicherweise in einem Oxidationskatalysator und einem nachgeschalteten System zur Minderung der Partikelbeladung, wie zum Beispiel in einem Partikelminderungssystem oder in einem Partikelfilter, bei Dieselmotoren in einem Dieselpartikelfilter. Zur Erreichung sehr niedriger Schadstoffemissionen ist gegebenenfalls noch eine Einrichtung zur Stickstoffoxid-($NO_x$-)Nachbehandlung angeordnet, wie zum Beispiel in Form eines SCR-Katalysators. Außerdem oder hinzukommend kann noch eine Abgasrückführung vorhanden sein, die entweder als Hochdruck-Abgasrückführung oder als Niederdruck-Abgasrückführung ausgestaltet ist und an entsprechender Stelle des Abgasstranges diesem Abgas entnimmt und stromaufwärts eines Verdichters in die Luftzufuhr einspeist.

Insbesondere bei Dieselmotoren mit sehr hoher spezifischer Leistung nimmt der Abgasvolumenstrom im Wesentlichen proportional mit der Leistung des Motors zu, insofern, wie durch verschiedene Standards gefordert, zur Einhaltung der Abgastemperatur und der Partikel-Emissionsgrenzen vorgegebene Lambda-Mindestwerte nicht überschritten werden sollen. Dabei sollen auch die Emissionsgrenzen bei niedriger Katalysatortemperatur eingehalten werden. Dies erfordert üblicherweise relativ umfangreiche beziehungsweise zahlreiche Einbauten in den Katalysatoren, die sich wiederum erhöhend auf den Abgasgegendruck auswirken. Bei einer Erhöhung des Abgasvolumenstroms erhöht sich somit auch wesentlich der Abgasgegendruck. Allerdings erhöht sich damit auch üblicherweise die Abgastemperatur.

Auch durch eine Niederdruck-Abgasrückführung wird eine Abgasgegendruckerhöhung bewirkt.

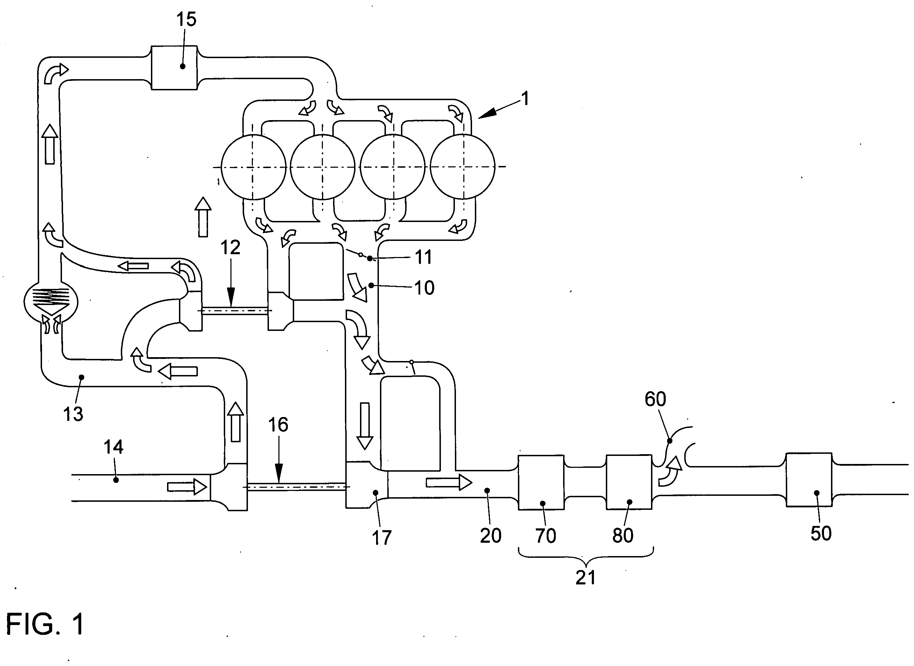

In beiliegender Figur 1 ist eine herkömmliche Abgasanlage mit zweistufig aufgeladener Brennkraftmaschine dargestellt. Ersichtlich ist, dass an eine Brennkraftmaschine 1 ein Abgasstrang 10 angeschlossen ist, in dem eine Abgasklappe 11 zur Regulierung des Volumenstroms eingeordnet ist. Mit dem Abgasstrang 10 ist ein Hochdruck-Abgasturbolader verbunden. Die vom Hochdruck-Abgasturbolader 12 zur Verfügung gestellte kinetische Energie wird zum Transport beziehungsweise zur Kompression von Luft genutzt, die über die Luftzufuhr 14 zur Verfügung gestellt wird. Diese Luft muss jedoch nicht unbedingt den Hochdruck-Abgasturbolader 12 passieren, sondern kann gegebenenfalls auch über einen Verdichter-Bypass 13 zum Ladeluftkühler 15 gelangen, über den sie dann der Brennkraftmaschine 1 zugeführt wird.

Im Abgasstrang ist außerdem ein Niederdruck-Abgasturbolader 16 angeordnet, dessen Turbine 17 wiederum an den ersten Abgaspfad 20 angeschlossen ist. Das von der Brennkraftmaschine 1 erzeugte Abgas wird somit in den ersten Abgaspfad 20 geleitet und passiert dort die erste Abgasreinigungseinrichtung 21, die in günstiger Ausführungsform einen Oxidationskatalysator 70 sowie eine Einrichtung zur Verringerung von Partikeln 80, wie zum Beispiel einen Partikelfilter oder auch ein Partikelminderungssystem, aufweisen kann. Stromabwärts der ersten Abgasreinigungseinrichtung 21 kann ein Abzweig 60 vorgesehen sein, der zum Anschluss eines Niederdruck-Abgasrückführungssystems ausgestaltet ist. Wiederum stromabwärts dieses Abzweiges 60 kann der dargestellte SCR-Katalysator 50 zur Reduktion von Stickstoffoxidverbindungen angeordnet sein.

Es ist aus Figur 1 ersichtlich, dass insbesondere durch die Anordnung der beiden Abgasturbolader 12, 16 sowie der Abgasreinigungseinrichtung 21 und des SCR-Katalysators 50 ein relativ hoher Abgasgegendruck in der Anlage herrscht, der die Effizienz des Betriebes der Brennkraftmaschine 1 mindert.

Zur Steigerung der Effizienz einer Abgasanlage sind verschiedene Ansätze bekannt. Es offenbart die DE 43 11 904 C2 eine Vorrichtung an einer Brennkraftmaschine, die einen Abgaspfad umfasst, in dem ein Bypass angeordnet ist, der bei einer bestimmten Bedingung geöffnet wird. Dadurch soll eine Anspringtemperatur eines Katalysators schnell erreicht werden, so dass dieser in einem optimalen Temperaturbereich betreibbar ist.

Ein ähnlicher Ansatz ist der DE 102 97 129 B4 und der DE 31 15 739 A1 entnehmbar, welche auf ein Verfahren zum Steuern des Ladedrucks eines turbogeladenen Verbrennungsmotors gerichtet sind, bei dem ebenfalls ein Bypass zur Durchströmung von Abgas für eine schnelle Katalysatorerwärmung freigegeben wird.

Der DE 10 2009 021 114 A1 ist ein Verfahren zum Betreiben einer luftverdichtenden Brennkraftmaschine bekannt, bei dem diverse Bypässe insbesondere für eine flexible Einstellung der Abgasrückführungsströme sowie zur optimalen Einstellung eines Luftgehaltes einer Brennkraftmaschine zur Erreichung geringer Schadstoffemissionen genutzt werden, wobei der gesamte Abgasstrom lediglich eine Abgasreinigungseinheit passiert.

In der DE 44 44 098 A1 ist eine Brennkraftmaschine mit zwei Zylinderbänken offenbart, wobei an jede Zylinderbank ein Abgasstrang angeschlossen ist. Zwischen den Abgassträngen ist ein Bypass angeordnet, mit dem in bestimmten Betriebssituationen der Abgasgegendruck auf die Brennkraftmaschine verringerbar ist. Dadurch lässt sich der in einem Abgasstrang angeordnete Abgasturbolader im Wesentlichen mit konstanten Parametern betreiben.

Im Dokument WO 03/050398 A1 wird eine Dieselbrennkraftmaschine mit zwei Abgaspfaden beschrieben, wobei die zwei Abgaspfade parallel von Abgas durchströmbar sind, wobei die durch die Abgaspfade strömende Abgasmenge mittels Ventilen steuerbar ist. Im einen der Abgaspfade ist ein Dieselpartikelfilter und im anderen der Abgaspfade ein Katalysator angeordnet. Eine Steuerungseinheit verlagert Abgasströme zwischen den zwei Pfaden, um die Filtereffizienz zu optimieren und einen inakzeptablen Abgasgegendruck zu vermeiden. Da der Abgaspfad mit dem Katalysator einen signifikant geringeren Strömungswiderstand als der Abgaspfad mit dem Dieselpartikelfilter hat, wird der Abgasgegendruck reduziert, indem wenigstens ein Teil der Abgasmenge durch den Abgaspfad mit dem Katalysator geleitet wird. Das Dokument DE 10 2007 053 932 A1 beschreibt eine Abgasanlage für eine Brennkraftmaschine eines Kraftfahrzeugs und deren Betriebsverfahren. Die Abgasanlage weist einen ersten Abgasstrang mit einem ersten brennkraftmaschinennah angeordneten Katalysator und einen zweiten Abgasstrang mit einem zweiten brennkraftmaschinenfern angeordneten Katalysator auf. Der erste Katalysator hat einen geringeren Strömungsquerschnitt als der zweite Katalysator, so dass dieser einen geringeren Abgasgegendruck bewirkt. Die Abgasmenge durch die zwei Abgasstränge ist kontinuierlich oder diskret steuerbar mittels einer Steuerklappe.

Im Dokument DE 10 2011 005 654 A1 ist eine mit Schweröl betriebene

Schiffsdieselbrennkraftmaschine offenbart. Sie weist eine Abgasreinigung mit einem Partikelfilter und einem Reduktionskatalysator auf. Der Partikelfilter ist fluidisch umgehbar über eine Bypassleitung, in welcher eine Reduktionsmitteldosiereinheit und ein Hydrolysekatalysator angeordnet sind. Über einen Verstellmechanismus ist der Abgasteilstrom durch die Bypassleitung einstellbar.

Der vorliegenden Erfindung liegt die Aufgabe zugrunde, eine Abgasbehandlungseinrichtung sowie ein Verfahren zur Aufbereitung von Abgas einer Brennkraftmaschine und eine Brennkraftanlage zur Verfügung zu stellen, mittels derer in einfacher, zuverlässiger und effizienter Weise der Abgasgegendruck in bestimmten Betriebssituationen verringerbar ist und somit eine angeschlossene Brennkraftanlage effizienter betreibbar ist.

Diese Aufgabe wird erfindungsgemäß durch die Abgasbehandlungseinrichtung nach Anspruch 1 sowie durch eine Brennkraftanlage nach einem der Ansprüche 7 und 8 und durch ein Verfahren nach Anspruch 11 gelöst. Ergänzend wird ein Kraftfahrzeug zur Verfügung gestellt, welches die erfindungsgemäße Abgasbehandlungseinrichtung oder eine erfindungsgemäße Brennkraftanlage umfasst. Vorteilhafte Ausgestaltungen der erfindungsgemäßen Abgasbehandlungseinrichtung sind den Unteransprüchen 2 bis 6 entnehmbar. Eine vorteilhafte Ausgestaltung der erfindungsgemäßen Brennkraftanlage sind den Unteransprüchen 9 und 10 entnehmbar. Eine vorteilhafte Ausgestaltung des erfindungsgemäßen Verfahrens zur Aufbereitung von Abgas einer Brennkraftmaschine ist den Unteransprüchen 12 und 13 entnehmbar.

Erfindungsgemäß wird eine Abgasbehandlungseinrichtung zur Aufbereitung von Abgas einer Brennkraftmaschine, insbesondere eines Dieselmotors, zur Verfügung gestellt, welche einen ersten Abgaspfad, in dem wenigstens eine erste Abgasreinigungseinrichtung angeordnet ist, und einen zweiten Abgaspfad, in dem wenigstens eine zweite Abgasreinigungseinrichtung angeordnet ist, umfasst, wobei die beiden Abgasreinigungseinrichtungen parallel von Abgas durchströmbar sind. Die beiden Abgasreinigungseinrichtungen sind derart ausgestaltet, dass mit der zweiten Abgasreinigungseinrichtung ein geringerer Abgasgegendruck bewirkbar ist, als mit der ersten Abgasreinigungseinrichtung.

Die beiden Abgaspfade sind strömungstechnisch mit der Brennkraftmaschine gekoppelt, so dass in der Brennkraftmaschine erzeugtes Abgas durch wenigstens einen der Abgaspfade strömt. Die Parallelität der Abgasreinigungseinrichtungen bezieht sich dabei auf ihre strömungstechnische Anordnung, so dass es in Abhängigkeit von der jeweiligen Steuerung oder Regelung der Abgasströme möglich ist, dass beide Abgasreinigungseinrichtungen zeitgleich von Abgas durchströmt werden.

Der Abgasgegendruck ist der Druck, der von der jeweiligen Abgasreinigungseinrichtung bei Anströmung mit Abgas des gleichen Volumenstroms erzeugt wird.

Der Vorteil der Erfindung liegt insbesondere darin, dass bei Abgasströmung über den zweiten Abgaspfad dem Abgas ein geringerer Gegendruck entgegengebracht wird, als wenn das Abgas lediglich durch den ersten Abgaspfad strömt. Dadurch lässt sich die Brennkraftmaschine effizienter betreiben.

Erfindungsgemäß umfasst die Abgasbehandlungseinrichtung ein Stellglied, mit dem bei Überschreitung eines bestimmten Abgasvolumenstroms der zweite Abgaspfad zur Durchströmung freigebbar ist. Der erste Abgaspfad kann demzufolge als Niederlast-Abgaspfad und der zweite Abgaspfad kann als Hochlast-Abgaspfad bezeichnet werden.

Somit wird insbesondere bei relativ hoher Leistung der Brennkraftmaschine und dem damit verbundenen hohem Volumenstrom sowie der relativ hohen Abgastemperatur der zweite Abgaspfad freigegeben, dessen zweite Abgasreinigungseinrichtung ein relativ geringes Volumen, eine relativ geringe Zellanzahl und/oder eine relativ geringe Edelmetallbeladung aufweisen kann, da bei der hohen Abgastemperatur eine effiziente und gründliche Reinigung des Abgases auch mit geringerem Materialeinsatz möglich ist.

Damit wird erreicht, dass bei geringeren Abgas-Volumenströmen, die eine relativ geringe Temperatur aufweisen, das Abgas durch den ersten Abgaspfad bzw. durch die erste Abgasreinigungseinrichtung strömt, durch die es gründlich gereinigt wird.

Erhöht sich der Volumenstrom und damit auch die Temperatur des Abgases, wird der zweite Abgaspfad bzw. die zweite Abgasreinigungseinrichtung zur Durchströmung freigegeben. Die zweite Abgasreinigungseinrichtung realisiert eine gründliche Reinigung des Abgases auf Grund der relativ hohen Abgastemperatur mit geringerem Material- bzw. konstruktivem Aufwand. Dadurch wird ein geringerer Abgasgegendruck bewirkt, als der erste Abgaspfad bei Durchströmung mit einem Abgas mit gleichen Volumenstrom- bzw. Temperaturparametern bewirken würde. Dies wiederum führt zu einer Entlastung der Brennkraftmaschine, so dass diese ihr zugeführte chemische Energie effizienter in kinetische Energie umsetzen kann.

Das Stellglied ist Bestandteil einer Regeleinrichtung oder Steuerungseinrichtung, je nach Durchführung der Zuschaltung bzw. Abschaltung des zweiten Abgaspfades. In praktischer Ausführungsform ist das Stellglied ein so genanntes Waste-Gate.

In einer Ausführungsalternative weist die Abgasbehandlungseinrichtung einen Abgasstrang auf, in dem eine Turbine eines Abgasturboladers angeordnet ist, wobei der erste Abgaspfad strömungstechnisch stromabwärts der Turbine an den Abgasstrang angeschlossen ist und der zweite Abgaspfad stromaufwärts der Turbine an den Abgasstrang angeschlossen ist.

Durch die Anordnung der Turbine des Abgasturboladers, der bevorzugt ein Niederdruck-Abgasturbolader ist, ist der Abgasvolumenstrom an der Anschlussstelle des ersten Abgaspfades stromabwärts der Turbine geringer, als stromaufwärts der Turbine, wo der zweite Abgaspfad angeschlossen ist.

In einer anderen Ausführungsalternative weist die Abgasbehandlungseinrichtung einen Abgasstrang auf, in dem eine Turbine eines Abgasturboladers angeordnet ist und der erste Abgaspfad strömungstechnisch stromabwärts der Turbine an den Abgasstrang angeschlossen ist und der zweite Abgaspfad stromaufwärts der ersten Abgasreinigungseinrichtung an den ersten Abgaspfad strömungstechnisch angeschlossen ist. In dieser Ausgestaltung der Erfindung ist vorteilhafterweise im zweiten Abgaspfad eine Sperreinrichtung, wie z.B. eine sogenannte Absperrklappe, angeordnet, mit der bei Überschreitung des bestimmten Abgasvolumenstromwertes der zweite Abgaspfad und damit die zweite Abgasreinigungseinrichtung zur Durchströmung freigebbar ist.

Diese Sperreinrichtung kann zusätzlich zu dem Stellglied angeordnet sein, das in diesem Fall in einem die Turbine umgehenden Bypass zwischen dem Abgasstrang und dem zweiten Abgaspfad positioniert ist.

Bevorzugt ist vorgesehen, dass die beiden Abgaspfade stromabwärts ihrer Abgasreinigungseinrichtungen strömungstechnisch miteinander verbunden sind. Dabei kann stromabwärts dieser Verbindungsstelle noch ein SCR-Katalysator zur Stickstoffoxid-Nachbehandlung angeordnet sein, durch den somit die Volumenströme aus beiden Abgaspfaden strömen.

Die Erfindung ist jedoch nicht auf diese Ausführungsform eingeschränkt, sondern es ist auch möglich, dass wenigstens eine der beiden Abgasreinigungseinrichtungen einen SCR-Katalysator umfasst.

Zur weiteren Effizienzsteigerung ist erfindungsgemäß vorgesehen, dass sich an die erste Abgasreinigungseinrichtung stromabwärts eine Niederdruck-Abgasrückführung anschließt.

Das heißt, dass stromabwärts der ersten Abgasreinigungseinrichtung ein Abzweig zum Anschluss einer Abgasrückführung zur Brennkraftmaschine vorgesehen ist, die auf Grund des bevorzugten relativ geringen Volumenstroms und des relativ geringen Drucks im ersten Abgaspfad als Niederdruck-Abgasrückführung ausgestaltet ist.

Vorzugsweise ist der Abstand der ersten Abgasreinigungseinrichtung zur Turbine geringer, als der Abstand der zweiten Abgasreinigungseinrichtung zur Anschlussstelle an den Abgasstrang. Damit wird eine motornahe Anordnung der ersten Abgasreinigungseinrichtung mit dem Vorteil der Ausnutzung der Wärme des Abgases realisiert, ohne dass dabei die beiden Abgaseinrichtungen miteinander kollidieren.

Ebenso wird dadurch der Abstand der Niederdruckabgas-Rückführung zur Brennkraftmaschine verringert und somit die Effizienz der Niederdruck-Abgasrückführung verbessert.

Zumindest eine der beiden Abgasreinigungseinrichtungen sollte wenigstens einen Oxidationskatalysator und/oder eine Einrichtung zur Verringerung von Partikeln aufweisen.

Eine solche Einrichtung zur Verringerung Partikeln kann ein Partikelminderungssystem und/oder einen Partikelfilter, bei Anwendung an einer Dieselkraftmaschine einen Dieselpartikelfilter, umfassen.

Gegebenenfalls umfasst die jeweilige Abgasreinigungseinrichtung auch einen sogenannten SCR-Katalysator zur Verringerung des Stickstoffoxid-($NO_x$-)Ausstoßes.

Weiterhin wird erfindungsgemäß eine Brennkraftanlage, welche wenigstens eine Brennkraftmaschine und daran angeschlossen eine erfindungsgemäße Abgasbehandlungseinrichtung aufweist, zur Verfügung gestellt, wobei das Volumen Vo eines Oxidationskatalysators der Abgasbehandlungseinrichtung zum Motorhubvolumen Vm im folgenden Verhältnis steht: $Vo \leq 0{,}6*Vm$. In bevorzugter Ausgestaltung der Erfindung sollte das Volumen Vo des Oxidationskatalysators nicht mehr als das 0,5-fache Motorhubvolumen Vm betragen, insbesondere nicht mehr als das 0,4-fache des Motorhubvolumens Vm, und in besonders bevorzugten Ausführungsformen der Erfindung nicht mehr als das 0,3-fache des Motorhubvolumens Vm.

Eine weitere erfindungsgemäße Brennkraftanlage umfasst wenigstens eine Brennkraftmaschine und daran angeschlossen eine erfindungsgemäße Abgasbehandlungseinrichtung, bei der die Einrichtung zur Verringerung von Partikeln ein Partikelfilter ist, dessen Volumen Vd zum Motorhubvolumen Vm im folgenden Verhältnis steht: $Vd \leq 1{,}5*Vm$. In bevorzugter Ausgestaltung der Erfindung sollte das Volumen Vd des Partikelfilters nicht mehr als das Motorhubvolumen Vm betragen, insbesondere nicht mehr als das 0,7-fache des Motorhubvolumens Vm.

Diese Ausgestaltung der Erfindung ist insbesondere bei Dieselpartikelfiltern anwendbar.

Dabei ist die erfindungsgemäße Brennkraftanlage nicht auf eines der Volumenverhältnisse eingeschränkt, sondern an einer Brennkraftanlage sind vorzugsweise beide erfindungsgemäßen Volumenverhältnisse realisiert.

In günstiger Ausführungsform der erfindungsgemäßen Brennkraftanlage ist die Brennkraftmaschine ein zweistufig aufgeladener Dieselmotor, wobei die Turbine zwischen dem Abgasstrang und dem ersten Abgaspfad Bestandteil eines Niederdruck-Abgasturboladers ist. Das heißt, dass bei dem favorisierten zweistufig aufgeladenen Dieselmotor stromaufwärts des Niederdruck-Abgasturboladers ein Hochdruck-Abgasturbolader angeordnet ist.

Die Erfindung ist jedoch nicht auf den zweistufig aufgeladenen Dieselmotor als Brennkraftmaschine eingeschränkt, sondern es kann die Erfindung auch an einstufig aufgeladenen Diesel oder Ottomotoren ausgeführt werden.

Es wird weiterhin erfindungsgemäß ein Verfahren zur Aufbereitung von Abgas einer Brennkraftmaschine mit einer Abgasnachbehandlungseinrichtung nach einem der Ansprüche 1 bis 6, zur Verfügung gestellt, bei dem bei Unterschreitung eines bestimmten Abgasvolumenstroms das Abgas durch einen ersten Abgaspfad geleitet wird, in dem wenigstens eine erste Abgasreinigungseinrichtung angeordnet ist; und bei Überschreitung des bestimmten Abgasvolumenstroms mittels eines Stellgliedes ein zweiter Abgaspfad, in dem wenigstens eine zweite Abgasreinigungseinrichtung angeordnet ist, zur Durchströmung freigegeben wird, wobei die zweite Abgasreinigungseinrichtung parallel zur ersten Abgasreinigungseinrichtung durchströmt wird und einen geringeren Abgasgegendruck bewirkt, als die erste Abgasreinigungseinrichtung.

Das heißt, dass insbesondere die erfindungsgemäße Abgasbehandlungseinrichtung dafür eingerichtet ist, dieses Verfahren auszuführen.

Vorzugsweise wird das Abgas nach Durchströmung der ersten Abgasreinigungseinrichtung zur Brennkraftmaschine zurückgeführt. Durch diese Niederdruck-Abgasrückführung lässt sich das stöchiometrische Kraftstoffverhältnis in der Brennkraftmaschine einstellen.

Der bestimmte Abgasvolumenstrom sollte wenigstens 50 %, bevorzugt wenigstens 80 %, des maximal möglichen Volumenstroms betragen.

Das heißt, dass ab einem Abgasvolumenstrom von wenigstens 50 % beziehungsweise 80 % des maximal möglichen Volumenstroms mit der Regeleinrichtung der zweite Abgaspfad zur Durchströmung freigegeben wird.

Ergänzend wird ein Kraftfahrzeug, insbesondere ein Dieselkraftfahrzeug, zur Verfügung gestellt, welches eine erfindungsgemäße Abgasbehandlungseinrichtung oder eine erfindungsgemäße Brennkraftanlage aufweist.

Die vorliegende Erfindung wird im Folgenden anhand der in den beiliegenden Zeichnungen dargestellten Ausführungsbeispiele erläutert.

Auf Figur 1 wurde bereits zur Erläuterung des Standes der Technik eingegangen.

Figur 2 zeigt eine erfindungsgemäße Abgasbehandlungseinrichtung und Brennkraftanlage einer ersten Ausführungsform,

Figur 3 zeigt eine erfindungsgemäße Abgasbehandlungseinrichtung und Brennkraftanlage einer zweiten Ausführungsform, und

Figur 4 zeigt eine erfindungsgemäße Abgasbehandlungseinrichtung und Brennkraftanlage einer dritten Ausführungsform.

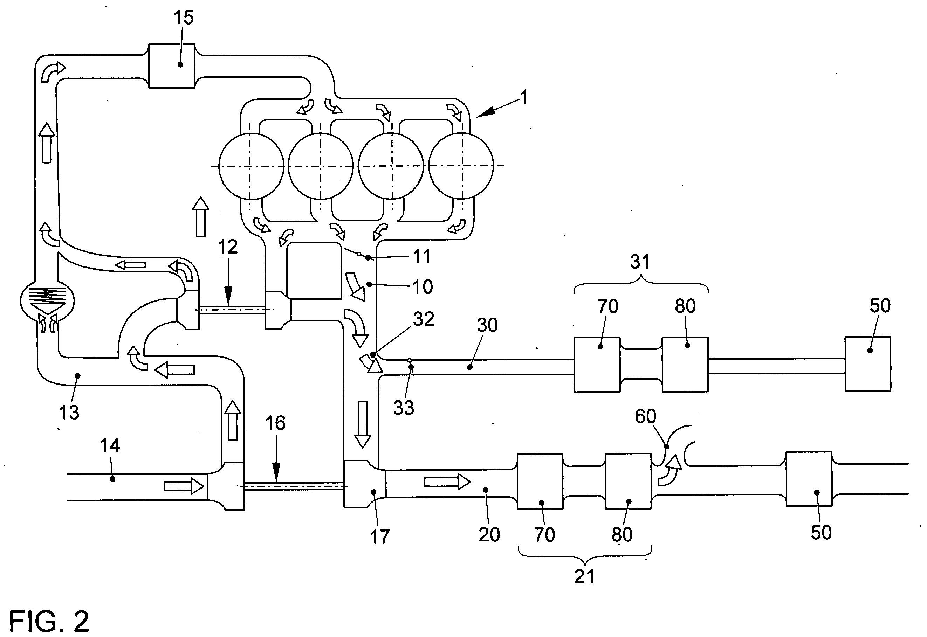

Wie auch die herkömmlichen Abgasbehandlungseinrichtungen beziehungsweise Brennkraftanlagen, wie sie in Figur 1 dargestellt sind, kann die erfindungsgemäße Abgasbehandlungseinrichtung sowie Brennkraftanlage ebenfalls einen Abgasstrang 10, eine Abgasklappe 11, einen Hochdruck-Abgasturbolader 12, einen Verdichter-Bypass 13, eine Luftzufuhr 14, einen Ladeluft-Kühler 15, einen Niederdruck-Abgasturbolader 16 und dessen Turbine 17, sowie einen ersten Abgaspfad 20 mit einer ersten Abgasreinigungseinrichtung 21, die einen Oxidationskatalysator 70 sowie eine Einrichtung zur Verringerung von Partikeln 80 aufweist, umfassen. Ebenfalls - wie zum Stand der Technik gemäß Figur 1 beschrieben - kann sich an die erste Abgasreinigungseinrichtung 21 ein SCR-Katalysator 50 anschließen, wobei zwischen diesem SCR-Katalysator 50 und der ersten Abgasreinigungseinrichtung 21 noch ein Abzweig 60 zum Anschluss einer nicht dargestellten Niederdruck-Abgasrückführung angeordnet sein kann. Dabei ist die vorliegende Erfindung nicht auf die Anordnung der genannten Bauelemente eingeschränkt, sondern sie dienen nur zur Veranschaulichung der in den Figuren 2 bis 4 dargestellten Ausführungsbeispiele. Da in Bezug zu Figur 1 die Anordnung und Funktion dieser Bauelemente bereits beschrieben wurde, wird zur Erläuterung der Figuren 2 bis 4 nur noch auf die die vorliegende Erfindung vom Stand der Technik unterscheidenden Merkmale eingegangen.

In Figur 2 ist ersichtlich, dass an den Abgasstrang 10 stromaufwärts der Turbine 17 des Niederdruck-Abgasturboladers 16 ein zweiter Abgaspfad 30 an der Anschlussstelle 32 angeschlossen ist. Dieser zweite Abgaspfad 30 umfasst eine zweite Abgasreinigungseinrichtung 31, die einen Oxidationskatalysator 70 sowie eine Einrichtung zur Verringerung von Partikeln 80 aufweisen kann. Stromabwärts dieser zweiten Abgasreinigungseinrichtung 31 ist auch im zweiten Abgaspfad 30 ein SCR-Katalysator 50 angeordnet. Zwischen der Anschlussstelle 32 und der zweiten Abgasreinigungseinrichtung 31 ist ein Stellglied 33 angeordnet, mit welchem regelungsbeziehungsweise steuerungstechnisch der Volumenstrom durch den zweiten Abgaspfad 30 einstellbar ist. Erfindungsgemäß öffnet das Stellglied 33 dann den zweiten Abgaspfad 30, wenn ein bestimmter Volumenstromwert im Abgasstrang 10 überschritten wird. Dies ist dann der Fall, wenn die Brennkraftmaschine 1 mit höherer Leistung betrieben wird, da sie dann einen höheren Brennstoffumsatz hat und je Zeiteinheit mehr Abgas produziert. Dadurch entsteht ein höherer Druck und Volumenstrom im Abgasstrang 10. Bei Überschreitung eines bestimmten Volumenstromwertes öffnet das Stellglied den zweiten Abgaspfad 30, so dass Abgas auch durch diesen zweiten Abgaspfad 30 und dessen zweite Abgasreinigungseinrichtung 31 strömen kann. Aufgrund dessen, dass bei der höheren Leistung der Brennkraftmaschine das Abgas auch höhere Temperaturen hat, müssen die Bestandteile der zweiten Abgasreinigungseinrichtung nicht derart materialintensiv ausgeführt sein, wie es die Bestandteile der ersten Abgasreinigungseinrichtung 21 sein müssen, die auch bei niedrigen Temperaturen des Abgases eine gründliche Abgasreinigung realisieren müssen. Demzufolge sind die Bestandteile der zweiten Abgasreinigungseinrichtung 31 derart ausführbar, dass sie einen geringeren Abgas-Gegendruck bewirken, als die Bestandteile der ersten Abgasreinigungseinrichtung 21. Das bedeutet, dass, wenn die Brennkraftmaschine mit höherer Leistung betrieben wird, dem durch den zweiten Abgaspfad 30 strömenden Abgas ein geringerer Gegendruck entgegengebracht wird, so dass die Brennkraftmaschine 1 effizienter betreibbar ist.

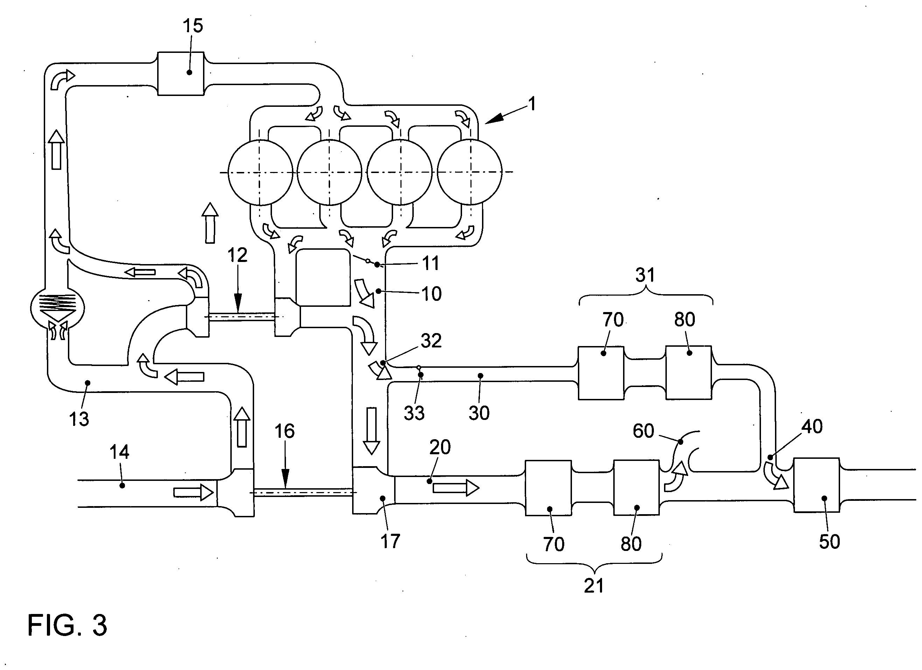

Zur Gewichtsminimierung kann - wie in Figur 3 dargestellt - vorgesehen sein, dass die beiden Abgaspfade 20, 30 an einer Verbindungsstelle 40 miteinander strömungstechnisch verbunden sind, so dass das Abgas aus beiden Abgaspfaden 20, 30 durch einen gemeinsamen SCR-Katalysator 50 strömen kann.

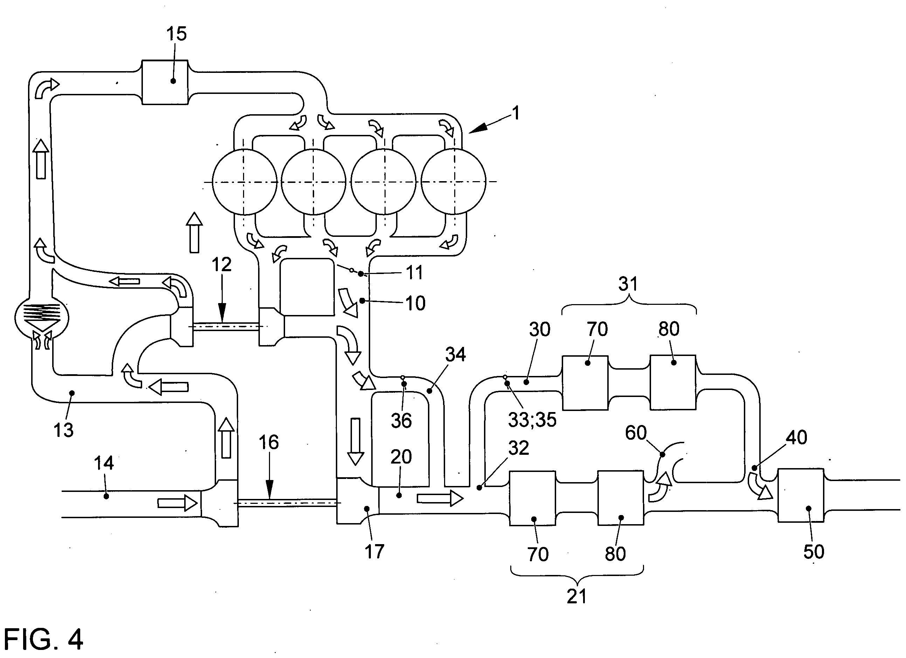

In einer weiteren besonderen Ausführungsform ist gemäß Figur 4 vorgesehen, dass zwischen dem Abgasstrang 10 und dem ersten Abgaspfad 20 ein Bypass 34 angeordnet ist, in dem ein so genanntes Waste-Gate 36 angeordnet ist. An einer stromabwärts dieses Bypasses 34 gelegenen Anschlussstelle 32 ist der zweite Abgaspfad 30 an den ersten Abgaspfad 20 angeschlossen. Im zweiten Abgaspfad 30 ist das Stellglied 33 angeordnet, welches in diesem Fall als eine Sperreinrichtung 35, zum Beispiel ausgeführt als eine Absperrklappe, angeordnet ist. In dieser Ausführungsform strömt das Abgas von der Brennkraftmaschine durch den Abgasstrang 10 und gelangt entweder über den Bypass 34, geregelt durch das Waste-Gate 36, oder über die Turbine 17 des Niederdruck-Abgasturboladers 16 in den ersten Abgasstrang 20. Bei einem relativ hohen Volumenstrom im ersten Abgaspfad 20 wird, vorzugsweise automatisch, das Stellglied 33 geöffnet, so dass der Abgasvolumenstrom über den zweiten Abgaspfad 30 strömen kann. Ist ein nur relativ geringer Abgasvolumenstrom vorhanden, bleibt das Stellglied 33 geschlossen und der Abgasvolumenstrom erfolgt über die erste Abgasreinigungseinrichtung 21.

Vorzugsweise ist in dem in Figuren 2 bis 4 dargestellten zweiten Abgaspfad 30 ein beschichtetes Partikelminderungssystem als Bestandteil der Abgasreinigungseinrichtung angeordnet, um eine wirksame Partikelminderung bei hohen Abgastemperaturen über die gleichzeitig hohen Stickstoffoxid-Rohemissionen zu erreichen.

**Bezugszeichenliste**

| | |
|---|---|
| 1 | Brennkraftmaschine |
| 10 | Abgasstrang |
| 11 | Abgasklappe |
| 12 | Hochdruck-Abgasturbolader |
| 13 | Verdichter-Bypass |
| 14 | Luftzufuhr |
| 15 | Ladeluft-Kühler |
| 16 | Niederdruck-Abgasturbolader |
| 17 | Turbine |
| 20 | erster Abgaspfad |
| 21 | erste Abgasreinigungseinrichtung |
| 30 | zweiter Abgaspfad |
| 31 | zweite Abgasreinigungseinrichtung |
| 32 | Anschlussstelle |
| 33 | Stellglied |
| 34 | Bypass |
| 35 | Sperreinrichtung (Absperrklappe) |
| 36 | Waste-Gate (für Ausführung mit Absperrklappe) |
| 40 | Verbindungsstelle (der beiden Abgaspfade) |
| 50 | SCR-Katalysator |
| 60 | Abzweig |
| 70 | Oxidationskatalysator |
| 80 | Einrichtung zur Verringerung von Partikeln |

**Patentansprüche**

1. Abgasbehandlungseinrichtung zur Aufbereitung von Abgas einer Brennkraftmaschine (1), insbesondere eines Dieselmotors, umfassend einen ersten Abgaspfad (20), in dem wenigstens eine erste Abgasreinigungseinrichtung (21) angeordnet ist, einen zweiten Abgaspfad (30), in dem wenigstens eine zweite Abgasreinigungseinrichtung (31) angeordnet ist, wobei die beiden Abgasreinigungseinrichtungen (21, 31) parallel von Abgas durchströmbar sind, und ein Stellglied (33), mit dem bei Überschreitung eines bestimmten Abgasvolumenstroms der zweite Abgaspfad (30) zur Durchströmung freigebbar ist, **wobei** die beiden Abgasreinigungseinrichtungen (21, 31) derart ausgestaltet sind, dass mit der zweiten Abgasreinigungseinrichtung (31) ein geringerer Abgasgegendruck bewirkbar ist, als mit der ersten Abgasreinigungseinrichtung (21), **dadurch gekennzeichnet, dass** sich an die erste Abgasreinigungseinrichtung (21) stromabwärts eine Niederdruck-Abgasrückführung anschließt.

2. Abgasbehandlungseinrichtung nach Anspruch 1 **dadurch gekennzeichnet, dass** die Abgasbehandlungseinrichtung einen Abgasstrang (10) aufweist, in dem eine Turbine (17) eines Abgasturboladers angeordnet ist und der erste Abgaspfad (20) strömungstechnisch stromabwärts der Turbine (17) an den Abgasstrang (10) angeschlossen ist und der zweite Abgaspfad (30) stromaufwärts der Turbine (17) an den Abgasstrang (10) angeschlossen ist.

3. Abgasbehandlungseinrichtung nach Anspruch 1, **dadurch gekennzeichnet, dass** die Abgasbehandlungseinrichtung einen Abgasstrang (10) aufweist, in dem eine Turbine (17) eines Abgasturboladers angeordnet ist und der erste Abgaspfad (20) strömungstechnisch stromabwärts der Turbine (17) an den Abgasstrang (10) angeschlossen ist und der zweite Abgaspfad (30) stromaufwärts der ersten Abgasreinigungseinrichtung (21) an den ersten Abgaspfad (20) strömungstechnisch angeschlossen ist.

4. Abgasbehandlungseinrichtung nach einem der vorhergehenden Ansprüche, **dadurch gekennzeichnet,** die beiden Abgaspfade (20, 30) stromabwärts ihrer Abgasreinigungseinrichtungen (21, 31) strömungstechnisch miteinander verbunden sind.

5. Abgasbehandlungseinrichtung nach einem der Ansprüche 2 bis 4, **dadurch gekennzeichnet, dass** der Abstand der ersten Abgasreinigungseinrichtung (21) zur Turbine (17) geringer ist, als der Abstand der zweiten Abgasreinigungseinrichtung (31) zur Anschlussstelle (32) an den Abgasstrang (10).

6. Abgasbehandlungseinrichtung nach einem der vorhergehenden Ansprüche, **dadurch gekennzeichnet, dass** zumindest eine der beiden Abgasreinigungseinrichtungen (21, 31) wenigstens einen Oxidationskatalysator (70) und/oder eine Einrichtung zur Verringerung von Partikeln aufweist.

7. Brennkraftanlage, umfassend wenigstens eine Brennkraftmaschine (1) und daran angeschlossen eine Abgasbehandlungseinrichtung nach Anspruch 6, bei der das Volumen Vo des Oxidationskatalysators (70) zum Motorhubvolumen Vm im folgenden Verhältnis steht:

$$Vo \leq 0,6 * Vm.$$

8. Brennkraftanlage, umfassend wenigstens eine Brennkraftmaschine (1) und daran angeschlossen eine Abgasbehandlungseinrichtung nach Anspruch 6, bei der die Einrichtung zur Verringerung von Partikeln ein Partikelfilter ist, dessen Volumen Vd zum Motorhubvolumen Vm im folgenden Verhältnis steht:

$$Vd \leq 1,5 * Vm.$$

9. Brennkraftanlage nach Anspruch 7 oder 8, **dadurch gekennzeichnet, dass** die Brennkraftmaschine (1) ein Dieselmotor ist.

10. Brennkraftanlage nach Anspruch 7, 8 oder 9, **dadurch gekennzeichnet, dass** die Brennkraftmaschine (1) ein zweistufig aufgeladener Dieselmotor ist, wobei die Turbine (17) zwischen dem Abgasstrang (10) und dem ersten Abgaspfad (20) Bestandteil eines Niederdruck-Abgasturboladers (16) ist.

11. Verfahren zur Aufbereitung von Abgas einer Brennkraftmaschine (1) mit einer Abgasbehandlungseinrichtung nach einem der Ansprüche 1 bis 6 bei dem bei Unterschreitung eines bestimmten Abgasvolumenstroms das Abgas durch einen ersten Abgaspfad (20) geleitet wird, in dem wenigstens eine erste Abgasreinigungseinrichtung (21) angeordnet ist; und bei Überschreitung des bestimmten Abgasvolumenstroms mittels eines Stellgliedes (33) ein zweiter Abgaspfad (30), in dem wenigstens eine zweite Abgasreinigungseinrichtung (31) angeordnet ist, zur Durchströmung freigegeben wird, wobei die zweite Abgasreinigungseinrichtung (31) parallel zur ersten Abgasreinigungseinrichtung (21) durchströmt wird und einen geringeren Abgasgegendruck bewirkt ist, als die erste Abgasreinigungseinrichtung (21).

12. Verfahren zur Aufbereitung von Abgas einer Brennkraftmaschine (1) nach Anspruch 11, **dadurch ge-**

**kennzeichnet, dass** das Abgas nach Durchströmung der ersten Abgasreinigungseinrichtung (21) zur Brennkraftmaschine (1) zurückgeführt wird.

13. Verfahren zur Aufbereitung von Abgas einer Brennkraftmaschine (1) nach einem der Ansprüche 11 und 12, **dadurch gekennzeichnet, dass** der bestimmte Abgasvolumenstrom wenigstens 50 % des maximal möglichen Volumenstroms beträgt.

14. Kraftfahrzeug, insbesondere Dieselkraftfahrzeug, mit einer Abgasbehandlungseinrichtung nach einem der Ansprüche 1 bis 6 oder einer Brennkraftantage nach Anspruch 7 oder 8.

**Claims**

1. Exhaust-gas treatment device for the treatment of exhaust gas of an internal combustion engine (1), in particular of a diesel engine, comprising a first exhaust-gas path (20), in which at least one first exhaust-gas purification device (21) is arranged, a second exhaust-gas path (30), in which at least one second exhaust-gas purification device (31) is arranged, wherein the two exhaust-gas purification devices (21, 31) can be flowed through by exhaust gas in parallel, and a control element (33), by means of which the second exhaust-gas path (30) can be opened up for a throughflow in the event of a particular exhaust-gas volume flow being exceeded, wherein the two exhaust-gas purification devices (21, 31) are designed such that a lower exhaust-gas back pressure can be effected by means of the second exhaust-gas purification device (31) than by means of the first exhaust-gas purification device (21), **characterized in that** the first exhaust-gas purification device (21) is adjoined, downstream, by a low-pressure exhaust-gas recirculation arrangement.

2. Exhaust-gas treatment device according to Claim 1, **characterized in that** the exhaust-gas treatment device has an exhaust-gas tract (10) in which a turbine (17) of an exhaust-gas turbocharger is arranged, and the first exhaust-gas path (20) is connected in terms of flow, downstream of the turbine (17), to the exhaust-gas tract (10), and the second exhaust-gas path (30) is connected, upstream of the turbine (17), to the exhaust-gas tract (10).

3. Exhaust-gas treatment device according to Claim 1, **characterized in that** the exhaust-gas treatment device has an exhaust-gas tract (10) in which a turbine (17) of an exhaust-gas turbocharger is arranged, and the first exhaust-gas path (20) is connected in terms of flow, downstream of the turbine (17), to the exhaust-gas tract (10), and the second exhaust-gas path (30) is connected in terms of flow, upstream of the first exhaust-gas purification device (21), to the first exhaust-gas path (20).

4. Exhaust-gas treatment device according to one of the preceding claims, **characterized in that** the two exhaust-gas paths (20, 30) are connected to one another in terms of flow downstream of their exhaust-gas purification devices (21, 31).

5. Exhaust-gas treatment device according to one of Claims 2 to 4, **characterized in that** the spacing of the first exhaust-gas purification device (21) to the turbine (17) is smaller than the spacing of the second exhaust-gas purification device (31) to the connection point (32) to the exhaust-gas tract (10).

6. Exhaust-gas treatment device according to one of the preceding claims, **characterized in that** at least one of the two exhaust-gas purification devices (21, 31) has at least one oxidation catalytic converter (70) and/or a device for the reduction of particles.

7. Internal combustion installation comprising at least one internal combustion engine (1) and, connected thereto, an exhaust-gas treatment device according to Claim 6, in which the volume Vo of the oxidation catalytic converter (70) has the following relationship to the engine swept volume Vm:

$$Vo \leq 0.6 * Vm.$$

8. Internal combustion installation comprising at least one internal combustion engine (1) and, connected thereto, an exhaust-gas treatment device according to Claim 6, in which the device for the reduction of particles is a particle filter, the volume Vd of which has the following relationship to the engine swept volume Vm:

$$Vd \leq 1.5 * Vm.$$

9. Internal combustion installation according to Claim 7 or 8, **characterized in that** the internal combustion engine (1) is a diesel engine.

10. Internal combustion installation according to Claim 7, 8 or 9, **characterized in that** the internal combustion engine (1) is a diesel engine with two-stage supercharging, wherein the turbine (17) between the exhaust-gas tract (10) and the first exhaust-gas path (20) is a constituent part of a low-pressure exhaust-gas turbocharger (16).

11. Method for the treatment of exhaust gas of an internal combustion engine (1) having an exhaust-gas treatment device according to one of Claims 1 to 6, in which method, in the event of a particular exhaust-gas volume flow being undershot, the exhaust gas is conducted through a first exhaust-gas path (20) in which at least one first exhaust-gas purification device (21) is arranged, and in the event of the particular exhaust-gas volume flow being exceeded, a control element (33) opens up a second exhaust-gas path (30), in which at least one second exhaust-gas purification device (31) is arranged, for a throughflow, wherein the second exhaust-gas purification device (31) is flowed through in parallel with respect to the first exhaust-gas purification device (21), and a lower exhaust-gas back pressure is effected than the first exhaust-gas purification device (21).

12. Method for the treatment of exhaust gas of an internal combustion engine (1) according to Claim 11, **characterized in that** the exhaust gas, after flowing through the first exhaust-gas purification device (21), is recirculated to the internal combustion engine (1).

13. Method for the treatment of exhaust gas of an internal combustion engine (1) according to either of Claims 11 and 12, **characterized in that** the particular exhaust-gas volume flow amounts to at least 50% of the maximum possible volume flow.

14. Motor vehicle, in particular diesel motor vehicle, having an exhaust-gas treatment device according to one of Claims 1 to 6 or having an internal combustion installation according to Claim 7 or 8.

**Revendications**

1. Dispositif de traitement des gaz d'échappement pour le traitement des gaz d'échappement d'un moteur à combustion interne (1), en particulier d'un moteur diesel, comprenant un premier chemin de gaz d'échappement (20) dans lequel est disposé au moins un premier dispositif de purification des gaz d'échappement (21), un deuxième chemin de gaz d'échappement (30) dans lequel est disposé au moins un deuxième dispositif de purification des gaz d'échappement (31), les deux dispositifs de purification des gaz d'échappement (21, 31) pouvant être parcourus en parallèle par les gaz d'échappement, et un actionneur (33), avec lequel, en cas de dépassement d'un débit volumique de gaz d'échappement déterminé, le deuxième chemin de gaz d'échappement (30) peut être libéré pour permettre l'écoulement, les deux dispositifs de purification des gaz d'échappement (21, 31) étant configurés de telle sorte qu'avec le deuxième dispositif de purification des gaz d'échappement (31), on puisse obtenir une contre-pression de gaz d'échappement plus faible qu'avec le premier dispositif de purification des gaz d'échappement (21), **caractérisé en ce qu'**une recirculation de gaz d'échappement à basse pression se raccorde en aval au premier dispositif de purification des gaz d'échappement (21).

2. Dispositif de traitement des gaz d'échappement selon la revendication 1, **caractérisé en ce que** le dispositif de traitement des gaz d'échappement présente une ligne d'échappement (10) dans laquelle est disposée une turbine (17) d'un turbocompresseur à gaz d'échappement, et le premier chemin de gaz d'échappement (20) est raccordé fluidiquement en aval de la turbine (17) à la ligne d'échappement (10) et le deuxième chemin de gaz d'échappement (30) est raccordé en amont de la turbine (17) à la ligne d'échappement (10).

3. Dispositif de traitement des gaz d'échappement selon la revendication 1, **caractérisé en ce que** le dispositif de traitement des gaz d'échappement présente une ligne d'échappement (10) dans laquelle est disposée une turbine (17) d'un turbocompresseur à gaz d'échappement et le premier chemin de gaz d'échappement (20) est raccordé fluidiquement en aval de la turbine (17) à la ligne d'échappement (10) et le deuxième chemin de gaz d'échappement (30) est raccordé fluidiquement en amont du premier dispositif de purification des gaz d'échappement (21) au premier chemin de gaz d'échappement (20).

4. Dispositif de traitement des gaz d'échappement selon l'une quelconque des revendications précédentes, **caractérisé en ce que** les deux chemins de gaz d'échappement (20, 30) sont raccordés fluidiquement l'un à l'autre en aval de leurs dispositifs de purification des gaz d'échappement (21, 31).

5. Dispositif de traitement des gaz d'échappement selon l'une quelconque des revendications 2 à 4, **caractérisé en ce que** la distance du premier dispositif de purification des gaz d'échappement (21) à la turbine (17) est inférieure à la distance du deuxième dispositif de purification des gaz d'échappement (31) au point de raccordement (32) à la ligne d'échappement (10).

6. Dispositif de traitement des gaz d'échappement selon l'une quelconque des revendications précédentes, **caractérisé en ce qu'**au moins l'un des deux dispositifs de purification des gaz d'échappement (21, 31) présente au moins un catalyseur d'oxydation (70) et/ou un dispositif pour réduire les particules.

7. Installation de combustion, comprenant au moins un moteur à combustion interne (1) et un dispositif de traitement des gaz d'échappement s'y raccordant, selon la revendication 6, dans laquelle la relation entre le volume Vo du catalyseur d'oxydation (70) et la cylindrée du moteur Vm est la suivante :

$$Vo \leq 0,6*Vm.$$

8.  Installation de combustion, comprenant au moins un moteur à combustion interne (1) et un dispositif de traitement des gaz d'échappement s'y raccordant, selon la revendication 6, dans laquelle le dispositif pour réduire les particules est un filtre à particules dont la relation entre le volume Vd et la cylindrée du moteur Vm est la suivante :

$$Vd \leq 1,5*Vm.$$

9.  Installation de combustion selon la revendication 7 ou 8, **caractérisée en ce que** le moteur à combustion interne (1) est un moteur diesel.

10. Installation de combustion selon la revendication 7, 8 ou 9, **caractérisée en ce que** le moteur à combustion interne (1) est un moteur diesel à suralimentation à deux étages, la turbine (17) entre la ligne d'échappement (10) et le premier chemin de gaz d'échappement (20) faisant partie d'un turbocompresseur à gaz d'échappement à basse pression (16).

11. Procédé de traitement de gaz d'échappement d'un moteur à combustion interne (1) comprenant un dispositif de traitement de gaz d'échappement selon l'une quelconque des revendications 1 à 6 dans lequel, en dessous d'un débit volumique de gaz d'échappement déterminé, le gaz d'échappement est conduit à travers un premier chemin de gaz d'échappement (20) dans lequel est disposé au moins un premier dispositif de purification des gaz d'échappement (21), et en cas de dépassement du débit volumique de gaz d'échappement déterminé, un deuxième chemin de gaz d'échappement (30) dans lequel est disposé au moins un deuxième dispositif de purification des gaz d'échappement (31), est libéré au moyen d'un actionneur (33) pour permettre l'écoulement, le deuxième dispositif de purification des gaz d'échappement (31) étant parcouru par l'écoulement parallèlement au premier dispositif de purification des gaz d'échappement (21) et une contre-pression de gaz d'échappement plus faible qu'avec le premier dispositif de purification des gaz d'échappement (21) étant obtenue.

12. Procédé de traitement des gaz d'échappement d'un moteur à combustion interne (1) selon la revendication 11, **caractérisé en ce que** les gaz d'échappement sont recirculés vers le moteur à combustion interne (1) après être passés à travers le premier dispositif de purification des gaz d'échappement (21).

13. Procédé de traitement des gaz d'échappement d'un moteur à combustion interne (1) selon l'une quelconque des revendications 11 et 12, **caractérisé en ce que** le débit volumique de gaz d'échappement déterminé vaut au moins 50 % du débit volumique maximal possible.

14. Véhicule automobile, en particulier véhicule diesel, comprenant un dispositif de traitement des gaz d'échappement selon l'une quelconque des revendications 1 à 6 ou une installation de combustion selon la revendication 7 ou 8.

FIG. 1

EP 2 573 347 B1

FIG. 2

EP 2 573 347 B1

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4311904 C2
- DE 10297129 B4
- DE 3115739 A1
- DE 102009021114 A1
- DE 4444098 A1
- WO 03050398 A1
- DE 102007053932 A1
- DE 102011005654 A1